# EUROPÄISCHE PATENTSCHRIFT

(11) **EP 0 792 576 B1**
(45) Veröffentlichungstag und Bekanntmachung des Hinweises auf die Patenterteilung: **14.11.2001**
(21) Anmeldenummer: 97102739.6
(22) Anmeldetag: 20.02.1997
(51) Int. Cl.: A01D 90/04, A01F 15/10

(54) **Schneidvorrichtung für Halm-und Blattgut**
Cutter for forage (stalks and foliage)
Dispositif de coupe pour tiges et feuilles

(30) Priorität: 01.03.1996 DE 19607915
(43) Veröffentlichungstag der Anmeldung: 03.09.1997
(73) Patentinhaber: B. Strautmann & Söhne GmbH & Co., D-49196 Bad Laer (DE)
(72) Erfinder: Kleine-Niesse, Richard, 49536 Lienen (DE)
(74) Vertreter: Stracke, Alexander, Dipl.-Ing.

(56) Entgegenhaltungen:
- EP-A- 0 659 332
- DE-U- 9 012 073
- DE-U- 9 216 457

## Beschreibung

Die Erfindung betrifft eine Schneidvorrichtung für Halm- und Blattgut in der Ausgestaltung nach dem Oberbegriff des Anspruches 1.

Die bisher bekannten Schneideinrichtungen sind so konstruiert, daß die Kraft, die auf die Ansprechschwelle der Schneidmesser wirkt, im wesentlichen vom Angriffspunkt des Fremdkörpers abhängt.

Liegt der Angriffspunkt im unteren Drittel der Schneidmesser, sind die Hebelverhältnisse so ungünstig, daß es häufig zu Messerbrüchen kommt. Die fast immer angebrachten Federelemente, die die Schneidmesser automatisch nach dem Ausweichen wieder in ihre ursprüngliche Lage zurückschwenken, üben einen bestimmten Gegendruck auf den Fremdkörper aus. Der Nachteil hierbei ist, daß die Schneide häufig über die gesamte Länge vom Fremdkörper beschädigt wird, und sich die Standzeit der Messerschneide somit erheblich verkürzt. Dieses führt zu einem höheren Kraftbedarf der Maschine, wobei die Antriebsorgane höher belastet werden.

Auch bei Schneidwerkskonstruktionen, bei denen sich alle Messer auf einer Achse befinden, welche durch einen festen bzw. variablen Speicherdruck in Arbeitsstellung gehalten werden, stellen sich diese Nachteile ein.

Insbesondere bei den letztgenannten Konstruktionen ist es sehr schwierig, den erforderlichen Speicherdruck zu definieren, da bei unterschiedlichen Schwadstärken bzw. verschiedenen Erntegütern der Druck auf die Schneideinrichtung stark variert.

Ein Schneidwerk dieser Art ist beispielsweise nach der EP 0 204 719 bzw. 100-A-8602802 bekannt. Hierbei werden die Schneidmesser mit Befestigungselementen an einer Querstange angebracht, welche um eine, einen Teil des Fahrgestells bildende Achse an der Vorderseite eines Ladewagens schwenkbar angeordnet ist und die Schneidmesser in den Preßkanal ein- oder ausschwenkt. Alle Schneidmesser werden von einer profilierten Querwelle gleichzeitig verriegelt oder freigegeben. Eine Fremdkörper- bzw. Überlastsicherung für jedes einzelne Messer ist hierbei nicht gegeben.

Die fehlende Ausweichmöglichkeit für die einzelnen Schneidmesser führt zu erhöhtem Verschleiß an den Schneiden und zu vermehrten Messerbrüchen durch Fremdkörper im aufgenommenen Futter. Die Einbeziehung des Fahrzeugrahmens in die Schneidvorrichtung ergibt ferner uneinheitliche Baugruppen.

Die vorliegende Erfindung hat sich die Aufgabe gestellt, eine Schneidvorrichtung mit einzeln abgesicherten, schnell auswechselbaren Schneidmessern zu schaffen, die in ihren wesentlichen Teilen auf einer schwenkbaren Achse hinter dem Preßkanal angeordnet ist und darüberhinaus dem Bediener anzeigt, daß ein oder mehrere Schneidmesser aus der Arbeitsstellung ausgeschwenkt sind. Bei dieser Ausführung geben die ausgeschwenkten Schneidmesser einen Fremdkörper so frei, daß eine Beschädigung der aus dem Preßkanal ausgeschwenkten Messerschneiden nicht erfolgt und die Schneidschärfe erhalten bleibt.

Die Erfindung wird nachstehend an einem Beispiel beschrieben und anhand von Zeichnungen dargesellt:

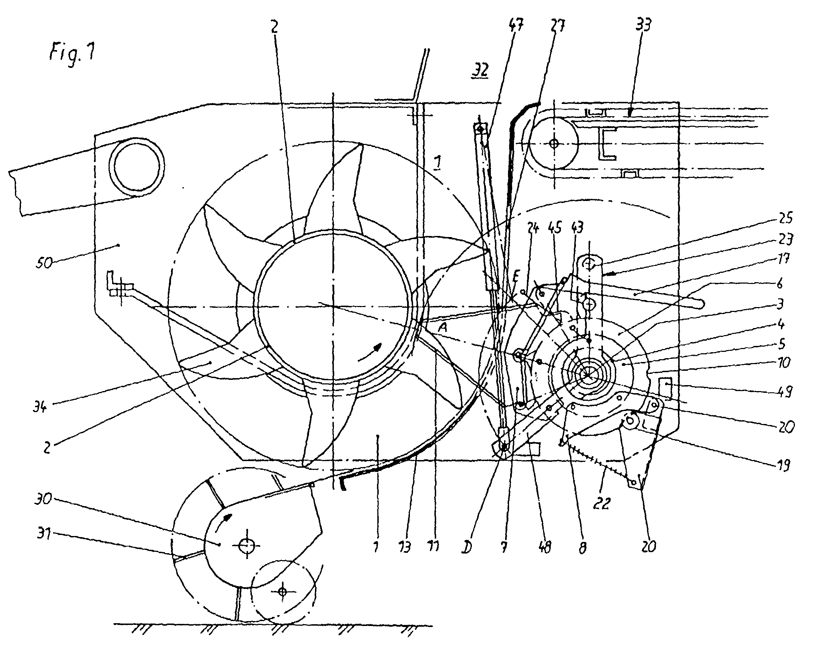

Fig. 1 zeigt einen Teilquerschnitt eines Ladewagens mit der neuen Schneidvorrichtung.
Fig. 2 zeigt den Teilquerschnit mit einem ausgewichenem Schneidmesser.

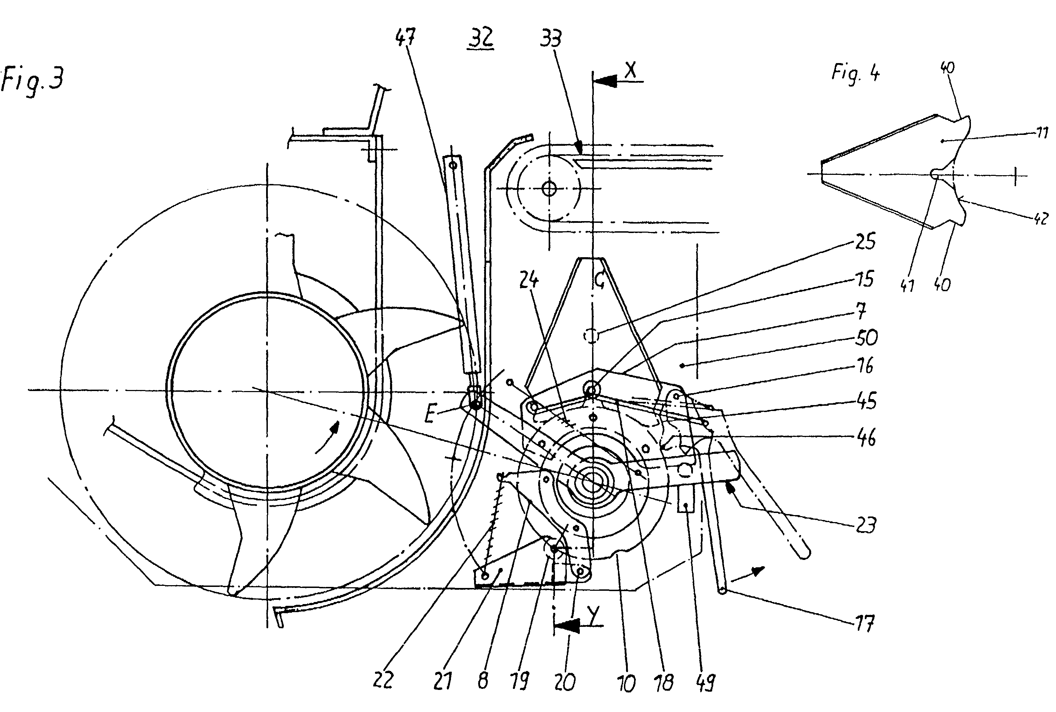

Fig. 3 zeigt die Schneidmesser in Montage- bzw. Demontagestellung.
Fig. 4 zeigt ein Schneidmesser.

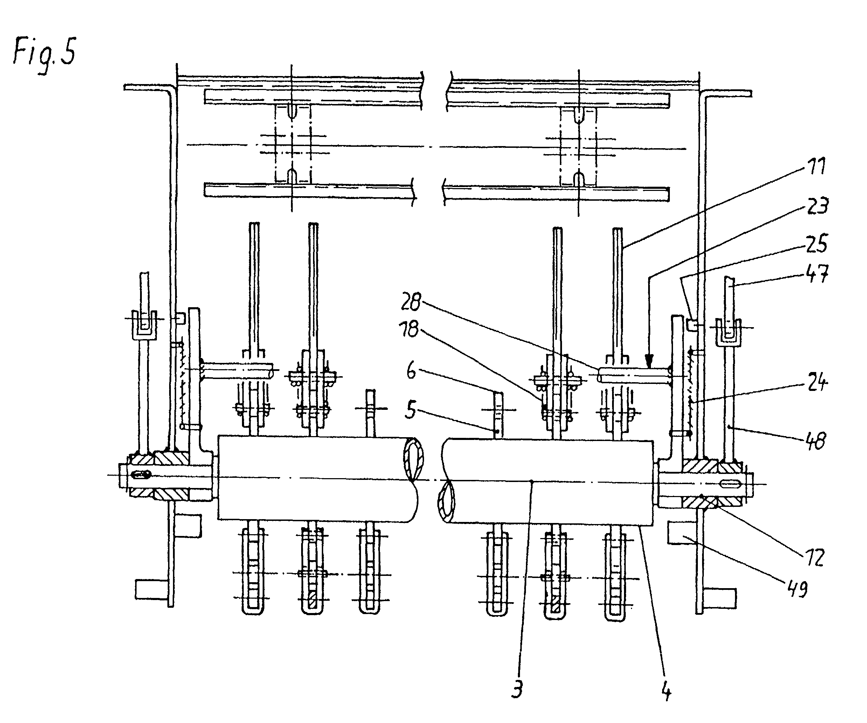

Fig. 5 zeigt eine Ansicht im Schnitt x - y nach Fig. 3.

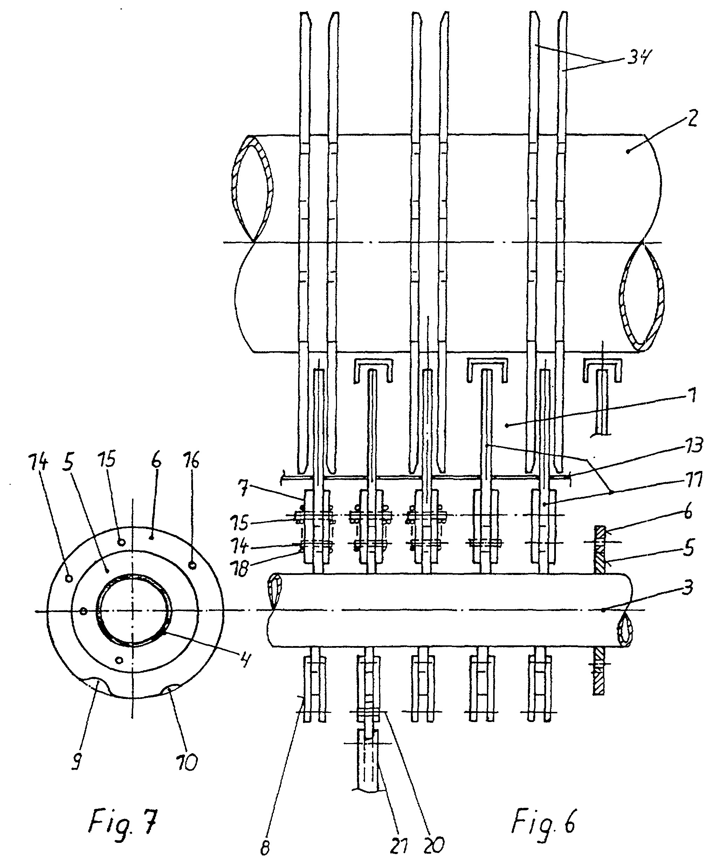

Fig. 6 zeigt eine Draufsicht.
Fig. 7 zeigt den Querschnitt durch die Achse der Schneidvorrichtung.

Von einem Ladewagen, dessen Vorderteil schematisch dargestellt ist, wrid über die Pick-up-Trommel 30) und deren Federzinken 31), Ladegut aufgenommen und durch die Übernahme durch die Förderzinken 34), der Preßwalze 2), in den Preß- und Förderkanal 1) geschoben, von den durch Schlitze 27) in der Rückwand 13) in den Preß- und Förderkanal hineinragenden Schneidmessern 11) geschnitten, zwischen diesen hindurchgeführt und in den Laderaum 32) gedrückt, wo es auf einem Kratzboden 33) abgelegt wird.

Im Ladegut befinden sich häufig Fremdkörper wie Steine, abgebrochene Zinken von Heumaschinen etc., trifft ein solcher Fremdkörper auf ein oder mehrere Schneidmesser 11), so weichen diese, zur Vermeidung von Brüchen, aus. Die Schneidmesser 11) sind auf dem Tragrohr 4) einer Achse 3) mit fest aufgesetzten, zentrischen Lagerringen 5), an drehbaren Außenringen 6) aufsteckbar angebracht.

Die Außenringe 6), die mit ihrem Innendurchmesser auf dem Außendurchmesser der Lagerringe 5) drehbar angeordnet sind, tragen beidseitig fest angebrachte plattenförmige Messerträger 7), die eine seitliche Führung geben und einen Bolzen 14), unter den die Anlagefläche 40) des symmetrischen Schneidmessers 11) geschwenkt wird. Ein weiterer Bolzen 15) nimmt die Schub- und Drehmomentkräfte des Schneidmessers 11) über den mit Anschrägungen versehenen Schlitz 41) auf. Ein Hebel 17) wird im Gelenk 16) gelagert, er verriegelt des Schneidmesser 11), welches sich mit seiner kreisbogenförmigen Anlagefläche 42) auf dem Außendurchmesser des Außenringes 6) abstützt. Der Hebel 17) wird durch eine Rückstellfeder 18) mit der Anschlagfläche 45) gegen die Anlagefläche 40) gedrückt, bei demontierten Schneidmessern 11) erfolgt eine Abstützung über die Anlage 46).

Der Außenring 6) besitzt die Kerben 9) und 10), in diese Kerben rastet eine von einem Hebel 21) getragene Rolle 19) ein. Getragen wird der im Drehpunkt 20) scharnierbare Hebel 21) von Platten 8), die fest am Lagerring 5) beidseitig befestigt sind und eine seitliche Führung für den Außenring 6) ergeben. Eine Spannfeder 22) zwischen Hebel 21) und einer Platte 8) verursacht eine ständige Auflage der Rolle 19) auf dem Außenring 6).

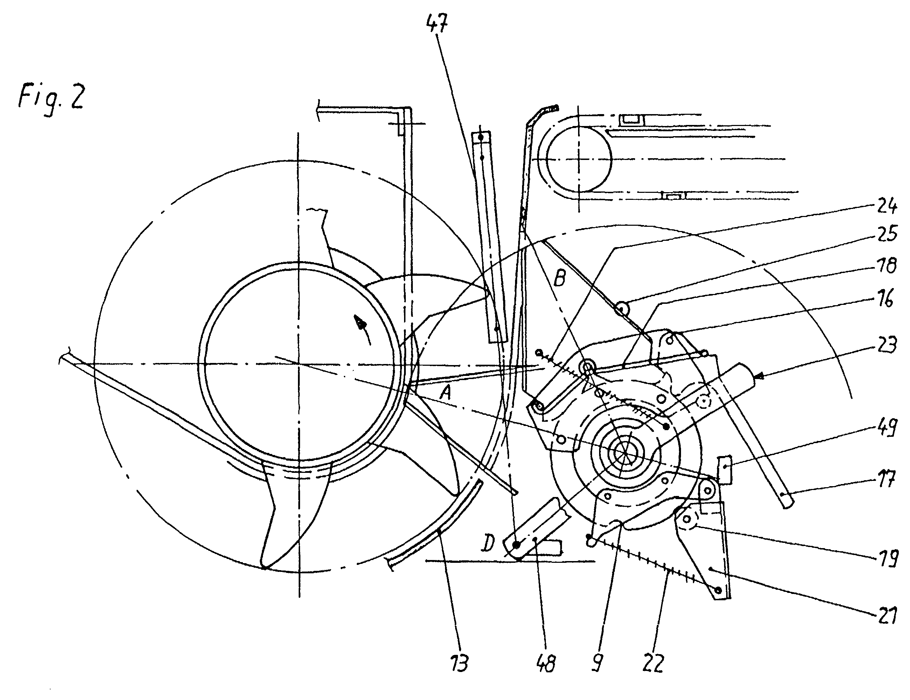

Die Kerbe 9) ist als Ansprechschwelle derart ausgeformt, daß bei einem bestimmten Druck gegen ein Schneidmesser 11), vor der Zerstörung von Teilen, die Rolle 19) gegen den Zug der Spannfeder 22) die Kerbe 9) verläßt. Das Ladegut verdreht das Schneidmesser 11) mit dem Außenring 6) um das stehenbleibende Tragrohr 4), bis es den Preß- u. Förderkanal 1) verlassen hat, damit es nicht bei ungleicher Ladegutförderung zurückfallen kann. springt die Rolle 19) in die Kerbe 10) des Außenringes 6). Das Schneidmesser 11) ist hierbei von der Arbeitsstellung A) in eine Stellung B) geschwenkt (s. Fig. 2). Den Schwenkvorgang hat der mit einer Feder 24) gegen eine Anschlagfläche 43) der Messerträger 7) gezogene Anschlagbügel 23), um die Achse 3) schwenkend, durch den Druck der Messerträger 7) mitgemacht, hierbei wird ein Signalgeber 25) freigegeben, der nun ein vorzugsweise elektrisches Signal an die Bedienstation leitet, wo sofort erkannt wird, daß mindestens ein Schneidmesser 11) die Arbeitslage A) verlassen hat.

Um ausgeschwenkte Schneidmesser 11) wieder in Betrieb zu setzen, wird über mindestens einen Hebel 48), der fest mit dem Tragrohr 4) verbunden ist und dieses über einenn doppeltwirkenden Hydrozylinder 47) verschwenkt, der Hebel 48) von der Lage D) in die Lage E) versetztt.

Sämtliche Schneidmesser 11) werden dadurch in die Stellung C) gebracht. Bei disem Schwenkvorgang schwenken an dem Querrohr 28) des Anschlagbügels 23) anliegende Schneidmesser 11) so weit mit, bis der Anschlagbügel 23), sich gegen einen an der Seitenwand 50) fest angebrachten Anschlag 49) legt. Beim

Weiterschwenken verläßt die Rolle 19) die Kerbe 10) und springt am Ende des Schwenkvorganges in die Kerbe 9).

Hiernach verdreht der an der Seitenwand 50) gelagerte Hydrozylinder 47) durch Veränderung der Hebellage von Lage E) nach Lage D) das Tragrohr 4) mit allen angeordneten Teilen derart, daß sämtliche Schneidmesser 11) wieder in Arbeitsstellung A) stehen.

Die Montage oder Demontage der Schneidmesser 11) erfolgt am besten in der Stellung C), über die Entriegelung durch den Hebel 17).

## Patentansprüche

1. Schneidvorrichtung für Halm- und Blattgut, die in den Preß- und Förderkanal von Erntemaschinen, wie Ladewagen und Ballenpressen, mit auf einer zur Preßwalze parallelen Achse (3) angeordneten, schwenkbaren Schneidmessern (11) in den Preß- und Förderkanal (1) eingreift, **dadurch gekennzeichnet, daß** ein mit fest angebrachten Lagerringen (5) versehenes, in Lagern (12) schwenkbares Tragrohr (4), sich quer zur Fahrtrichtung, etwa über die gesamte Breite hinter der Rückwand (13) des Preß- und Förderkanals (1) erstreckt und die Lagerringe (5) mit einzeln herausnehmbaren, einzeln gegen Überlastung gesicherten Schneidmessern (11), welche auf drehbaren Außenringen (6) gelagert sind, trägt.

2. Schneidvorrichtung nach Anspruch 1, **dadurch gekennzeichnet, daß** die Außenringe (6) eine als Ansprechschwelle ausgebildete Kerbe (9) tragen.

3. Schneidvorrichtung nach den Ansprüchen 1 u. 2, **dadurch gekennzeichnet, daß** die Außenringe (6) eine als Halteschwelle ausgebildete Kerbe (10) tragen.

4. Schneidvorrichtung nach den Ansprüchen 1 - 3, **dadurch gekennzeichnet, daß** beidseitig an den Außenringen (6), Messertragplatten (7) fest angeordnet sind, welche mit den Bolzen (14) und (15) und dem im Gelenk (16) scharnierbaren, mit einer Rückstellfeder (18) versehenen Hebel (17), die Schneidmesser (11) zwischen sich tragen.

5. Schneidvorrichtung nach den Ansprüchen 1 - 4, **dadurch gekennzeichnet, daß** der Lagerring (5) beidseitig fest angeordnete Platten (8), zur Aufnahme des mit einer Rolle (19) versehenen, um den Drehpunkt (20) scharnierbaren, mit einer Spannfeder (22) versehenen Hebels (21), trägt.

6. Schneidvorrichtung nach den Ansprüchen 1 - 5, **dadurch gekennzeichnet, daß** die Rolle (19) in der Kerbe (9), in Arbeitsstellung der Schneidmesser (11), anliegt.

7. Schneidvorrichtung nach den Ansprüchen 1 - 6, **dadurch gekennzeichnet, daß** die Rolle (19) in der Kerbe (10), nach dem Ausschwenken eines überlasteten Schneidemessers (11), anliegt.

8. Schneidvorrichtung nach den Ansprüchen 1 - 7, **dadurch gekennzeichnet, daß** ein Signalgeber (25) die Stellung des Anschlagbügels (23) überwacht.

9. Schneidvorrichtung nach den Ansprüchen 1 - 8, dadurch gekennzeichent, daß über Hebel (48) das Tragrohr (4) komplett verschwenkbar ist.

## Claims

1. Cutter for stalks and foliage which is engaged , inside the baling chamber and the feeder (1) of harvesters like for example load wagons and baling presses, with rotating cutting blades (11) in the baling chamber and the feeder (1) which are arranged on an axis (3) parallel to the press roller, **characterised in that** a support tube (4), which is equipped with fixed bearing rings (5) and is rotating in bearings (5), extends transversely to the moving direction over about the whole breadth of the rear wall (13) of the baling chamber and the feeder (1) and which tube is bearing bearing rings (5) with cutting blades, which can be extracted individually and are secured individually against overcharge and are mounted on exterior rotating rings (6).

2. Cutter according to claim 1, **characterised in that** the exterior rings (6) are bearing a notch (9) formed as a sensibility threshold.

3. Cutter according to claim 1 and 2 , **characterised in that** the exterior rings (6) are bearing a notch (9) formed as a stopping threshold.

4. Cutter according to claim 1 to 3, **characterised in that** fixed blade carrier plates (7) are arranged on both sides of the exterior rings (6) which are maintaining between it the cutting blades (11) with the bolts (14) and (15) and the lever (17) which is articulated at the articulation (16) with a return spring (18).

5. Cutter according to claim 1 to 4, **characterised in that** the bearing ring (5) is equipped on both sides with fixed plates (8) destined to receive the lever (21) which is equipped with a roll (19) and a track tension spring (8) articulated around the point of rotation (20).

6. Cutter according to claim 1 to 5, **characterised in that** the roll (19), reposes in the operation position of the cutting blades (11) in the notch (9).

7. Cutter according to claim 1 to 6, **characterised in that** the roll (19), reposes, after the overcharged cutting blades have swivelled out, in the notch (10).

8. Cutter according to claim 1 to 7, **characterised in that** a signal sender (25) controls the position of the abutment stirrup (23).

9. Cutter according to claim 1 to 8, **characterised in that** the support tube (4) can completely be swivelled out by means of levers (48).

## Revendications

1. Dispositif de coupe pour produits de récolte à tiges et à feuilles, qui, à l'intérieur du canal de compression et d'alimentation de machines de récolte, telles que des chargeuses et des presses à balles, agit dans le canal de compression et d'alimentation (1) avec des couteaux (11) pivotants, montés sur un axe (3) parallèle au rouleau de pressage, **caractérisé en ce qu'**un tube-support (4) muni de bagues de palier (5) fixes, monté pivotant dans des paliers (12), s'étend transversalement à la direction de déplacement, sensiblement sur toute la largeur derrière la cloison arrière (13) du canal de compression et d'alimentation (1) et porte les bagues de palier (5) avec des couteaux (11) démontables séparément, protégés individuellement contre les surcharges, qui sont montés sur des bagues extérieures (6) tournantes.

2. Dispositif de coupe selon la revendication 1, **caractérisé en ce que** les bagues extérieures (6) portent une encoche (9) conformée en seuil de déclenchement.

3. Dispositif de coupe selon les revendications 1 et 2, **caractérisé en ce que** les bagues extérieures (6) portent une encoche (10) conformée en seuil de retenue.

4. Dispositif de coupe selon les revendications 1 à 3, **caractérisé en ce que** des plaques porte-couteaux (7) sont montées fixes de part et d'autre des bagues extérieures (6), lesquelles plaques portent entre elles les couteaux (11) au moyen des axes (14) et (15) et du levier (17) muni d'un ressort de rappel (18), articulé au niveau de l'articulation (16).

5. Dispositif de coupe selon les revendications 1 à 4, **caractérisé en ce que** la bague de palier (5) est munie des deux côtés de plaques (8) fixes destinées à recevoir le levier (21) muni d'un galet (19) et d'un ressort de traction (22), articulé autour du point (20).

6. Dispositif de coupe selon les revendications 1 à 5, **caractérisé en ce que** le galet (19), dans la position de travail des couteaux (11) repose dans l'encoche (9).

7. Dispositif de coupe selon les revendications 1 à 6, **caractérisé en ce que** le galet (19), après pivotement d'un couteau (11) suite à une surcharge, repose dans l'encoche (10).

8. Dispositif de coupe selon les revendications 1 à 7, **caractérisé en ce qu'**un détecteur (25) surveille la position de l'étrier de butée (23).

9. Dispositif de coupe selon les revendications 1 à 8, **caractérisé en ce que** le tube-support (4) peut être amené à pivoter en totalité grâce un levier (48).
